# FASCICULE DE BREVET EUROPEEN

(11) **EP 2 507 970 B1**
(45) Date de publication et mention de la délivrance du brevet: **17.06.2020**
(21) Numéro de dépôt: 10807455.0
(22) Date de dépôt: 02.12.2010
(51) Int. Cl.: H04L 29/06

(54) **PROCÉDÉS D'ENVOI ET DE TRAITEMENT D'UNE RÉPONSE SIP**
VERFAHREN ZUM SENDEN UND VERARBEITEN VON SIP-ANTWORTEN
METHOD FOR SENDING AND PROCESSING A SIP RESPONSE

(30) Priorité: 04.12.2009 FR 0958666
(43) Date de publication de la demande: 10.10.2012
(73) Titulaire: Transpacific IP Group Limited, Grand Cayman KY1-1001 (KY)
(72) Inventeur: BOIZARD, Stéphane, F-31620 Fronton (FR); PROUVOST, Sébastien, F-31300 Toulouse (FR); CLEUZIOU, Olivier, F-94200 Ivry Sur Seine (FR)
(74) Mandataire: Eidelsberg, Olivier Nathan
(86) Numéro de dépôt international: PCT/FR2010/052597
(87) Numéro de publication internationale: WO 2011/067540

(56) Documents cités:
- EP-A2- 1 528 818
- WO-A1-2009/086935
- US-A1- 2008 098 117
- US-A1- 2009 196 183
- SPARKS DYNAMICSOFT R: "The Session Initiation Protocol (SIP) Refer Method; rfc3515.txt", NETWORK WORKING GROUP RFC 1717, INTERNET SOCIETY (ISOC) 4, RUE DES FALAISES CH- 1205 GENEVA, SWITZERLAND, CH, 1 April 2003 (2003-04-01), XP015009297, ISSN: 0000-0003

## Description

### Arrière-plan de l'invention

La présente invention se rapporte au domaine général des télécommunications.

Elle concerne plus particulièrement le traitement d'une requête conforme au protocole SIP (Session Initiation Protocol), émise sur un réseau de télécommunications, et traversant une pluralité de nœuds du réseau jusqu'à un destinataire, l'un de ces nœuds ayant détecté un événement l'empêchant de traiter la requête et donc de la transmettre vers le nœud suivant.

Au sens de l'invention, un nœud d'un réseau SIP désigne toute entité de ce réseau capable de router une requête SIP (i.e. conforme au protocole SIP) vers sa destination. Un tel nœud sera préférentiellement un équipement physique du réseau.

Ainsi, l'invention a une application privilégiée, mais non limitative, dans le contexte des réseaux de voix sur IP (VoIP) basés sur le protocole SIP ou par exemple avec un réseau IMS (Internet Multimedia Subsystem).

Un événement ou une situation empêchant un nœud du réseau de traiter une requête SIP désigne par exemple un manque de ressources au niveau de ce nœud, une congestion ou une rupture de ses liens vers les nœuds situés en aval du réseau sur le chemin identifié pour la requête, etc. Dans la suite de la description, les termes aval et amont seront employés en référence au chemin emprunté par la requête, dans le sens source de la requête vers destination de la requête.

Or, il se peut que d'autres chemins dans le réseau existent pour cette même requête, c'est-à-dire, arrivant au même destinataire mais passant par des nœuds différents. Par conséquent, il peut être utile qu'un nœud en amont du nœud ayant détecté l'empêchement (désigné ci-après par « nœud en échec ») tente un chemin alternatif : on parle alors de reroutage de la requête.

Dans les réseaux SIP actuels, lorsqu'un nœud intermédiaire A0, présent sur le chemin d'une requête d'appel SIP, est dans un état de congestion temporaire ou de maintenance, il peut être configuré de sorte à envoyer au nœud A1, le précédant sur le chemin, une réponse d'échec 503 « Service Unavailable ». Ce message est défini plus en détails dans le document RFC 3261 intitulé « SIP : Session Initiation Protocol », édite par l'IETF.

Conformément au protocole SIP, à la réception d'une réponse d'échec 503, le nœud A1 doit tenter de rerouter la requête d'appel SIP vers un autre nœud que le nœud A0. Si le nœud A1 ne trouve pas à son niveau d'autres nœuds permettant d'acheminer la requête d'appel SIP vers son destinataire (soit parce qu'il n'en existe pas, soit parce que ceux-ci sont également en échec), un reroutage de la requête est alors entrepris par un nœud A2 situé en amont du nœud A1, puis un nœud A3, etc.

Or, il arrive qu'aucun reroutage ne permette l'acheminement de la requête d'appel vers son destinataire, et ce, quel que soit le niveau auquel il est entrepris dans le chemin. On parlera alors de reroutage inefficace.

Ces reroutages inefficaces peuvent être nombreux en fonction de la topologie du réseau et, de ce fait, nuisibles au bon fonctionnement du réseau de télécommunications. Ils sont en effet à l'origine d'une charge inutile du réseau, qui peut être non négligeable et se faire aux dépens d'autres appels.

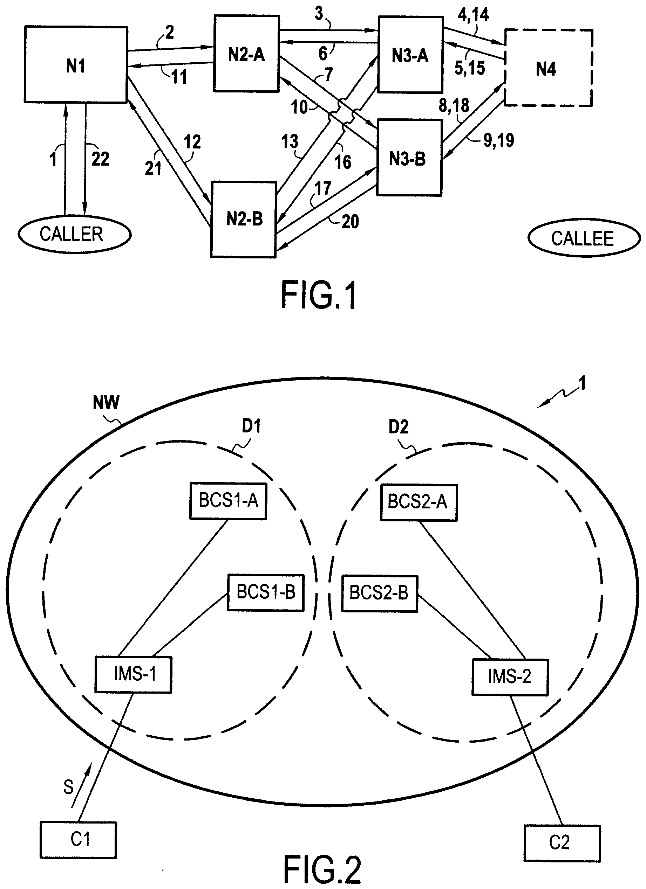

Par exemple, en référence à la **figure 1****,** dans une configuration où une requête SIP d'appel émise par un appelant (CALLER) doit transiter par quatre nœuds pour atteindre son destinataire (CALLEE) et le quatrième nœud N4 envoie une réponse d'échec 503 « Service Unavailable », les nœuds précédents sont chacun à leur tour, sur réception de cette réponse d'échec, susceptibles de tenter un reroutage inefficace de la requête. Dans l'exemple représenté sur la figure 1, ceci donne lieu à quatre émissions successives de la requête (transitions 4, 8, 14, 18), qui se soldent par quatre réponses d'échec (transitions 5, 9, 15, 19) envoyées par le quatrième nœud N4 avant que l'échec de l'appel ne soit notifié à l'appelant (transition 22). Autrement dit, la charge du réseau occasionnée par une seule requête SIP au final inefficace dans cette configuration est multipliée par quatre sur le quatrième nœud.

On comprend donc bien que les multiples tentatives de reroutage entreprises dans le réseau SIP peuvent non seulement accroître sensiblement la charge inutile dans le réseau mais également l'engorgement des nœuds déjà en échec.

Par ailleurs, le protocole SIP, dans sa version actuelle, n'autorise le reroutage d'une requête d'appel que dans des cas très limités d'empêchement du nœud à traiter la requête d'appel, et suite à l'émission d'une réponse d'échec 503. Or, en raison notamment de la multiplication des reroutages inefficaces pouvant être rencontrés dans le cadre de l'utilisation de cette réponse d'échec, celle-ci n'est finalement que peu utilisée par les opérateurs des réseaux de télécommunications.

Le document US 2009/0196183 décrit une architecture de routage et de reroutage SIP optimisée utilisant une approche système et réseau intégrée.

Le document WO2009/086935 décrit un procédé de traitement d'un message SIP dans un réseau de communication, au cours duquel, un nœud réécrit un entête du message et insère une information permettant à un nœud distant de déterminer l'adresse destinataire du message.

Le document US 2008/0098117 décrit un procédé permettant de fixer un chemin de routage pour transmettre un message SIP.

Le document RFC 3515 intitulé « The Session Initiation Protocol (SIP) Refer Method » d'avril 2003, définit la méthode SIP REFER.

### Objet et résumé de l'invention

La présente invention a pour but notamment de pallier les inconvénients précités.

Elle propose avantageusement à cette fin, d'activer un paramètre dans les réponses remontées par un nœud en échec sur le réseau SIP (typiquement dans une réponse d'échec), de sorte à contrôler le reroutage des requêtes dans le réseau.

Ainsi l'invention repose d'une part, sur un procédé d'envoi d'une réponse de notification d'un empêchement à traiter une requête SIP par un nœud, et d'autre part sur un procédé de traitement de cette réponse de notification par le nœud la recevant, autrement dit d'interprétation du paramètre activé dans cette réponse.

Selon un premier aspect, l'invention vise donc un procédé d'envoi d'une réponse SIP par un premier nœud d'un réseau de télécommunications selon la revendication 1.

Ce procédé est remarquable en ce qu'il comprend en outre, avant l'étape d'envoi, une étape d'activation dans la réponse SIP d'un paramètre autorisant un reroutage de la requête, et pouvant être configuré par le second nœud.

Corrélativement, l'invention vise également un dispositif d'envoi d'une réponse SIP dans un réseau de télécommunications selon la revendication 9.

Le dispositif d'envoi selon l'invention est remarquable en ce qu'il comprend en outre des moyens pour activer dans la réponse SIP, avant son envoi au second dispositif, un paramètre autorisant un reroutage de la requête, et pouvant être configuré par le second dispositif.

Ainsi, l'invention ne propose plus, comme dans l'état actuel de la technique, d'associer à une réponse d'échec particulière, à savoir une réponse 503 « Service Unavailable », une possibilité de reroutage de la requête. Mais elle propose d'activer dans le message de réponse émis par le nœud ayant détecté un empêchement à traiter la requête d'appel (c'est-à-dire dans la réponse d'échec), en complément des informations usuelles de notification de la raison de l'empêchement, un paramètre additionnel indiquant qu'un reroutage de la requête par le nœud immédiatement en amont dans le chemin de la requête et recevant ce message, est autorisé et possible.

On notera que le terme paramètre est à considérer ici dans son sens général, en ce qu'il désigne un indicateur de reroutage, ou autrement dit, un élément indiquant qu'un reroutage est autorisé. Il peut s'agir d'un paramètre SIP tel que défini dans le document RFC 3261 intitulé « SIP : Session Initiation Protocol », édite par l'IETF, mais il peut également être porté par un entête SIP, par un champ d'un entête SIP, par un élément du corps de la réponse SIP, etc.

En outre, on entend au sens de l'invention, par activation d'un paramètre :
- l'insertion de ce paramètre dans la réponse SIP, de sorte qu'un nœud recevant ce message et capable d'interpréter le paramètre, identifie qu'un reroutage de la requête est autorisé du fait de la simple présence de ce paramètre dans la réponse ; et/ou
- le positionnement de ce paramètre à une valeur prédéterminée, interprétée par le nœud comme autorisant le reroutage.

On utilisera indifféremment les termes activé ou actif, et désactivé ou inactif, pour désigner l'état du paramètre dans la réponse.

Ce paramètre peut avantageusement être configuré (i.e. être activé ou désactivé, avoir sa valeur modifiée, être maintenu en l'état, etc.) par le second nœud, autrement dit par le nœud, ou de façon équivalente par le dispositif, recevant la réponse SIP contenant le paramètre.

L'invention offre ainsi une plus grande flexibilité en termes de reroutage que les mécanismes actuellement implémentés dans le protocole SIP.

En effet, d'une part, la possibilité de reroutage n'est plus limitée à une cause particulière d'empêchement, ni au choix d'un type particulier de réponse notifiant l'empêchement (réponse d'échec SIP 503).

D'autre part, l'utilisation d'un paramètre configurable dans la réponse permet avantageusement d'activer et de désactiver facilement la possibilité de reroutage par un nœud recevant cette réponse, ce qui n'est pas permis actuellement par le protocole SIP.

En effet, dans les réseaux SIP actuels, lorsqu'un nœud reçoit une réponse d'échec 503, il ne peut en changer le type avant de la transmettre aux nœuds précédents. Par conséquent, chaque nœud du chemin reçoit la réponse d'échec 503 et, sur réception de cette réponse, peut tenter un reroutage de la requête d'appel. L'invention offre la liberté de pouvoir à tout moment supprimer cette possibilité, et limiter le reroutage de la requête au nœud précédant immédiatement le nœud en échec dans le chemin de la requête.

L'invention trouve ainsi un intérêt particulier dans les réseaux SIP où les acheminements sont complexes entre un nœud source (demandeur) et un nœud destinataire (demandé), c'est-à-dire notamment dans les réseaux dans lesquels le nombre de nœuds intermédiaires traversés par une requête SIP est important (i.e. supérieur à 2) et les chemins pouvant être empruntés par la requête sont multiples. Elle permet, dans ces réseaux, de limiter le nombre de reroutages inefficaces, par la mise en œuvre d'un traitement approprié par le nœud recevant le message comprenant le paramètre autorisant le reroutage.

Dans un mode particulier de réalisation de l'invention, le procédé d'envoi comprend en outre, après l'étape de détection, une étape de vérification de la validité d'au moins un critère prédéterminé.

Ainsi, le reroutage de la requête peut être conditionné d'une part, par la détection d'un événement ou d'une situation empêchant un nœud du réseau de traiter la requête SIP, et d'autre part, par des critères supplémentaires liés par exemple à la cause ou à la nature de l'empêchement. Le choix d'autoriser le reroutage appartient donc au nœud ayant détecté l'empêchement.

Notamment, le paramètre ne pourra être activé (par exemple inséré) dans la réponse notifiant l'empêchement, que si celui-ci est dû à un défaut n'affectant que le premier nœud (manque de ressources, congestion, maintenance du premier nœud, etc.) et non l'ensemble des nœuds situés en aval et menant au destinataire de la requête.

En variante, on peut également considérer un critère lié à la capacité du nœud amont dans le chemin, auquel est envoyé la réponse SIP (second nœud), à traiter le paramètre se trouvant dans cette réponse.

De cette sorte, si le second nœud n'est pas apte à interpréter le paramètre comme autorisant un reroutage (par exemple parce qu'il n'a pas encore été mis à jour), le second nœud ne recevra pas ce paramètre et de ce fait, ne le transférera pas aux nœuds amont dans le chemin. Ces nœuds ne recevant pas de réponse comportant ce paramètre, ils ne tenteront pas de reroutage de la requête, qu'ils soient adaptés ou non à interpréter le paramètre.

Dans un mode de réalisation particulier, on vérifie la validité du critère lié à la capacité du second nœud à traiter le paramètre en utilisant une indication comprise dans la requête SIP et un identifiant du second nœud.

Ainsi, avantageusement, chaque nœud par lequel transite la requête SIP peut insérer, dans la requête, une indication selon laquelle il est adapté à interpréter le paramètre, ainsi qu'un identifiant, tel que son adresse IP. Une telle indication peut, par exemple, être insérée dans l'entête « Supported » de la requête SIP, connu de l'homme du métier. Le premier nœud peut alors s'assurer que cette indication émane bien du second nœud, c'est-à-dire du nœud placé juste en amont sur le chemin de la requête, en comparant l'identifiant se trouvant dans la requête et l'identifiant du second nœud dont il reçoit la requête (présent notamment dans l'en-tête « Via paramètre received »). Si le critère n'est pas vérifié, autrement dit, si le second nœud n'est pas adapté à interpréter le paramètre, le premier nœud n'active pas le paramètre dans la réponse SIP, de sorte à éviter tout reroutage inefficace par un nœud en amont du second nœud.

Dans un mode particulier de réalisation, une valeur du paramètre activé dans la réponse dépend d'une cause de l'empêchement.

De cette sorte, il est possible de renseigner le second nœud, pour qu'il soit en mesure de juger de la pertinence d'un reroutage de la requête SIP vers différents candidats potentiels.

Selon un second aspect, l'invention vise également un procédé de traitement d'une réponse SIP selon la revendication 5.

Ainsi, l'invention permet de limiter le reroutage au premier niveau en amont du nœud ayant détecté un empêchement à traiter la requête. Préférentiellement, tout nœud recevant une réponse SIP de notification d'empêchement dans laquelle le paramètre est désactivé (par exemple une réponse SIP ne contenant pas ce paramètre), ne tentera pas de reroutage de la requête SIP.

De ce fait, si le premier nœud ne dispose pas de route alternative ou si le reroutage tenté échoue, alors il remontera une réponse SIP de notification d'empêchement en désactivant l'indication de possibilité de routage (par exemple, en la supprimant de la réponse qu'il a reçue du deuxième nœud). Le troisième nœud recevant cette réponse SIP, ne tentera pas de reroutage. De cette sorte, on limite les reroutages inefficaces et une charge inutile dans le réseau.

Les inventeurs ont par ailleurs constaté qu'une telle stratégie en termes de reroutage atteignait des performances similaires, voire meilleures, que celles atteintes aujourd'hui lorsqu'il est possible de rerouter la requête à tous les niveaux, et ce, avec une complexité bien inférieure.

Dans un mode particulier de réalisation de l'invention, si l'étape de recherche ne permet pas d'identifier un quatrième nœud, le procédé de traitement comprend en outre :
- une étape de désactivation du paramètre dans la réponse reçue du deuxième nœud ; et
- une étape d'envoi de la réponse ainsi modifiée au troisième nœud.

Dans une variante de réalisation, lorsque la réponse reçue du deuxième nœud contient le paramètre activé, le procédé de traitement comprend en outre une étape de vérification de la validité d'au moins un critère prédéterminé, et, si ledit au moins un critère est valide, une étape d'envoi au troisième nœud d'une réponse SIP notifiant celui-ci d'un empêchement d'un traitement de la requête dans laquelle le paramètre est activé.

On se laisse ainsi la possibilité de tenter un reroutage par le troisième nœud dans certaines situations, telles que par exemple, lorsque la réponse SIP vient d'un nœud particulier, ou lorsque l'étape de recherche ne permet pas d'identifier un quatrième nœud. Autrement dit, dans ces situations identifiées par des critères prédéterminés, le paramètre autorisant le reroutage n'est pas désactivé par le premier nœud dans la réponse SIP, avant sa transmission au nœud amont (troisième nœud).

Dans l'exemple précité où l'étape de recherche ne permet pas d'identifier un quatrième nœud (i.e., le premier nœud ne dispose pas de chemin alternatif pour la requête), le troisième nœud pourra entreprendre un reroutage de la requête SIP, sur réception de la réponse SIP. Toutefois, le reroutage en cascade peut encore être évité, étant donné que le premier nœud ne dispose pas de route alternative et n'a donc pas entrepris lui-même de tentative de reroutage. Il suffira pour cela que le troisième nœud, en cas de reroutage(s) inefficace(s), désactive le paramètre contenu dans la réponse SIP avant de la transmettre vers les nœuds amont.

On notera que conformément à l'invention, un nœud recevant une réponse SIP notifiant un empêchement à traiter la requête dans lequel le paramètre est désactivé ou inactif (autrement dit, dans lequel il n'existe pas ou il a une valeur indiquant qu'un reroutage n'est pas autorisé), ne tentera pas de reroutage, mais remontera vers le nœud amont cette réponse SIP tel que reçue.

Selon un autre aspect, l'invention vise un système d'un réseau de télécommunications selon la revendication 10.

Le système selon l'invention permet ainsi de limiter les reroutages inefficaces dans le réseau, et dispose des mêmes avantages que le dispositif de traitement et le dispositif d'envoi selon l'invention.

Dans un mode particulier de réalisation, au moins des nœuds intermédiaires comprend des moyens d'insertion dans la requête SIP d'une indication relative à sa capacité à traiter le paramètre, ces moyens étant activés avant l'envoi de la requête vers un autre nœud intermédiaire, ce nœud intermédiaire étant un dispositif d'envoi d'une réponse SIP conforme à l'invention comprenant en outre des moyens, activés après la détection d'un événement empêchant le traitement de la requête, de vérification de la validité d'un critère lié à cette capacité.

La notification de l'échec de traitement de la requête peut être faite par exemple à l'usager de l'équipement source. En variante, si l'équipement source est une entité d'interfonctionnement de protocoles, cette notification peut être effectuée par l'interfonctionnement de la réponse d'empêchement de traitement vers un autre protocole.

Dans un mode particulier de réalisation, les différentes étapes du procédé d'envoi et du procédé de traitement sont déterminées par des instructions de programmes d'ordinateurs.

En conséquence, l'invention vise aussi un programme d'ordinateur sur un support d'informations, ce programme étant susceptible d'être mis en œuvre dans un dispositif d'envoi ou plus généralement dans un ordinateur selon la revendication 8.

Chaque programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Il est possible d'avoir un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Des modes de réalisations préférés sont décrits dans les revendications dépendantes.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, représente un exemple d'une pluralité de reroutages inefficaces d'une requête SIP entrepris dans un réseau de télécommunications ;
- la figure 2 représente un exemple d'un système d'un réseau de télécommunications conforme à l'invention, dans un mode particulier de réalisation ;
- la figure 3 représente l'architecture matérielle d'un nœud du système représenté sur la figure 2 ;
- la figure 4 représente un exemple d'extraits de table de routage ;
- la figure 5 représente, sous forme d'ordinogramme, les principales étapes du procédé d'envoi d'une réponse SIP selon l'invention, dans un mode particulier de réalisation, et lorsqu'il est mis en œuvre par un nœud du système représenté sur la figure 2 ;
- la figure 6 représente, sous forme d'ordinogramme, les principales étapes du procédé de traitement d'un message selon l'invention, dans un mode particulier de réalisation, et lorsqu'il est mis en œuvre par un nœud du système représenté sur la figure 2 ;
- la figure 7 illustre un exemple d'application de l'invention.

### Description détaillée d'un mode de réalisation

La **figure 2** représente, dans son environnement, un système 1 d'un réseau NW de télécommunications conforme à l'invention, dans un mode particulier de réalisation.

Le réseau NW est un réseau de voix sur IP (VoIP), s'appuyant sur le protocole de signalisation SIP. Ce protocole est connu de l'homme du métier et ne sera pas décrit plus en détails ici. De plus amples informations sur le protocole SIP sont disponibles dans le document RFC 3261, intitulé « SIP : Session Initiation Protocol » et édité par l'IETF.

Dans l'exemple envisagé ici, le réseau NW a une architecture constituée de plusieurs domaines distincts, à savoir les domaines D1 et D2. De façon générale, un domaine est un (sous-)réseau de télécommunications indépendant, tel que par exemple un réseau de VoIP géré par un opérateur de téléphonie fixe ou par un opérateur de téléphonie mobile, etc.

Les domaines D1 et D2 reposent tous deux ici sur une architecture IMS (IP Multimedia Subsystem), telle que spécifiée dans les standards de normalisation 3GPP et TISPAN. De façon connue, une telle architecture s'appuie sur un cœur de réseau IMS (aussi appelé réseau cœur IMS), qui comprend plusieurs entités fonctionnelles telles que par exemple une entité CSCF (Call Session Control Function), une entité BGCF (Breakout Gateway Control Function), et des serveurs d'applications. Ces entités sont décrites plus en détails dans le document TISPAN, « ES 282 007 IP Multimedia Subsytem (IMS) : Functional architecture NGN IMS Architecture », ETSI, Technical Report, 2006.

Ainsi, chaque domaine D1 et D2 comprend un réseau cœur IMS, noté respectivement IMS-1 et IMS-2, ainsi qu'une pluralité de terminaux clients (par exemple les terminaux C1 et C2), pouvant se connecter aux domaines D1 et D2 via les réseaux cœurs IMS-1 et IMS-2 selon divers réseaux d'accès.

Les domaines D1 et D2 sont en outre reliés entre eux et aux domaines externes (par exemple au réseau public Internet), par des équipements dits de bordure. Dans l'exemple décrit ici, pour des raisons de simplicité, on se limitera à deux éléments de bordure par domaine, à savoir BCS1-A, BCS1-B pour le domaine D1 et BCS2-A, BCS2-B pour le domaine D2. Pour atteindre les domaines externes, les éléments de bordure BCS1-A et BCS1-B peuvent être utilisés sans distinction dans le domaine D1 à partir du réseau cœur IMS-1. De même, les éléments de bordure BCS2-A et BCS2-B peuvent être utilisés sans distinction dans le domaine D2 à partir du réseau cœur IMS-2.

On notera que l'exemple décrit ici n'est donné qu'à titre illustratif et n'est en aucun cas limitatif. L'invention s'applique en effet à d'autres architectures de réseau, notamment constituée d'un seul domaine ou plus de deux domaines, gérés ou non par le même opérateur. En outre, ces domaines peuvent avoir une architecture différente, et il est possible de considérer un nombre différent d'éléments de bordure et/ou d'équipements IMS, ainsi que d'autres types d'équipements.

De façon connue dans un réseau SIP, une requête SIP émise par un équipement source vers un équipement destinataire, est véhiculée par un signal qui passe par de nombreux nœuds (i.e. équipements) du réseau.

Certains de ces nœuds ont des fonctions importantes à réaliser sur la requête SIP, comme par exemple la fourniture de services supplémentaires telle que la présentation du nom de l'équipement source. D'autres nœuds ont des rôles de transit uniquement ou d'interfonctionnement de protocoles, sans plus value à proprement parler sur le service, en dehors de l'acheminement de la requête et cette fonction d'interfonctionnement. On comprend aisément que ces nœuds peuvent être remplacés par d'autres nœuds ayant des fonctions identiques ou similaires.

Dans l'exemple envisagé ici, les équipements de bordure BCS1-A, BCS1-B, BCS2-A, BCS2-B et les réseaux cœur IMS-1 et IMS-2 sont des nœuds du système 1 du réseau de télécommunications NW, par lesquels transitent une requête SIP émise, par exemple, par le terminal client C1 (équipement source au sens de l'invention) à destination du terminal client C2 (équipement destinataire au sens de l'invention). Autrement dit, il s'agit d'entités du réseau NW capables de router une requête SIP vers sa destination. On utilisera indifféremment, dans la suite de la description, les termes nœud, équipement ou dispositif pour désigner les entités BCS1-A, BCS1-B, BCS2-A, BCS2-B, IMS-1 et IMS-2.

Pour des raisons de simplicité, on limitera la description de l'invention à ces six nœuds. Toutefois, bien entendu, d'autres nœuds pourraient être considérés, et notamment en nombre plus important.

En outre, dans l'exemple envisagé ici, on suppose que chacun de ces équipements, ou nœuds, est à la fois un dispositif d'envoi et un dispositif de traitement conformes à l'invention. Cette hypothèse n'est toutefois en aucun cas limitative. L'invention s'applique également dès lors qu'au moins deux nœuds successivement empruntés par la requête sont respectivement un dispositif de traitement et un dispositif d'envoi conformes à l'invention.

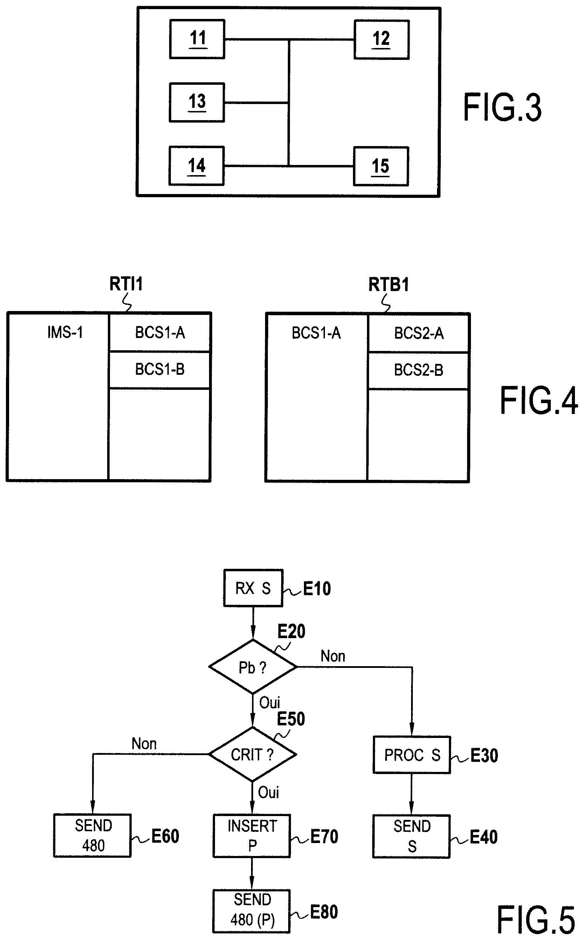

Chaque équipement du système 1 (i.e. BCS1-A, BCS1-B, BCS2-A, BCS2-B, IMS-1 et IMS-2) a ici l'architecture matérielle d'un ordinateur, telle que représentée sur la **figure 3****.**

Ainsi, chaque équipement du système 1 comprend notamment un processeur 11, des moyens de communication 12 avec les autres équipements du réseau NW, et éventuellement avec des équipements externes au réseau, une mémoire vive 13, une mémoire morte 14, et une mémoire réinscriptible non volatile 15.

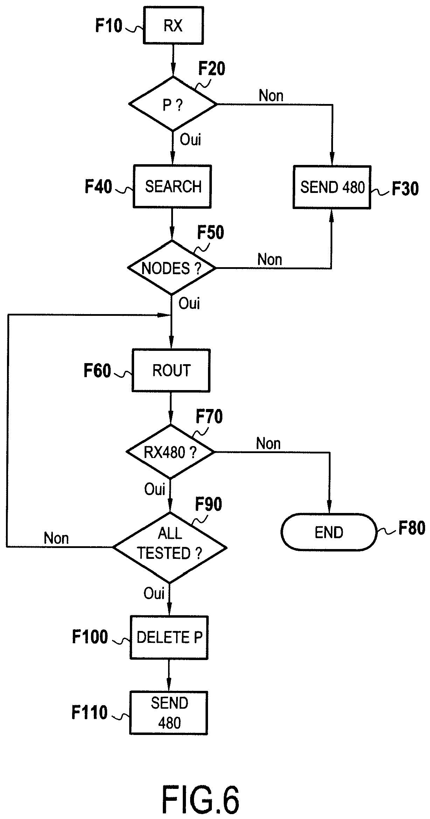

La mémoire morte 14 comporte un programme informatique conforme à l'invention, adapté à exécuter les principales étapes du procédé d'envoi selon l'invention représentées sur la figure 5 décrite ultérieurement, ainsi qu'un programme conforme à l'invention, adapté à exécuter les principales étapes du procédé de traitement selon l'invention représentées sur la figure 6 décrite ultérieurement.

La mémoire réinscriptible 15 comprend ici une table de routage au sein du réseau NW. Cette table de routage identifie le ou les nœuds vers le(s)quel(s) l'équipement peut router une requête SIP lui parvenant. Une telle table est connue de l'homme du métier et ne sera pas décrite plus en détails ici. Elle peut être prédéfinie en fonction de la topologie du réseau, ou en variante être déterminée et mise à jour à l'aide d'une procédure dynamique s'appuyant par exemple sur des annonces réseau émises par les divers nœuds du réseau.

Des exemples d'extraits de tables de routage sont donnés à la **figure 4****,** pour les équipements IMS-1 (table RTI1) et BCS1-A (table RTB1). Par souci de simplicité, seuls les nœuds vers lesquels router les requêtes dans le sens C1 vers C2 ont été représentés. Ainsi, selon ces exemples :
- le réseau cœur IMS-1 peut router une requête SIP lui parvenant d'un client C1, vers les éléments de bordure BCS1-A et BCS1-B ; et
- l'équipement de bordure BCS1-A peut router une requête SIP lui parvenant du réseau cœur IMS-1, vers les éléments de bordure BCS2-A et BCS2-B.

Nous allons maintenant décrire, en référence aux **figures 5****,** **6** **et** **7****,** les principales étapes d'un procédé d'envoi et d'un procédé de traitement selon l'invention, lorsqu'ils sont mis en œuvre par des équipements du système représentés sur la figure 2, dans un mode particulier de réalisation de l'invention.

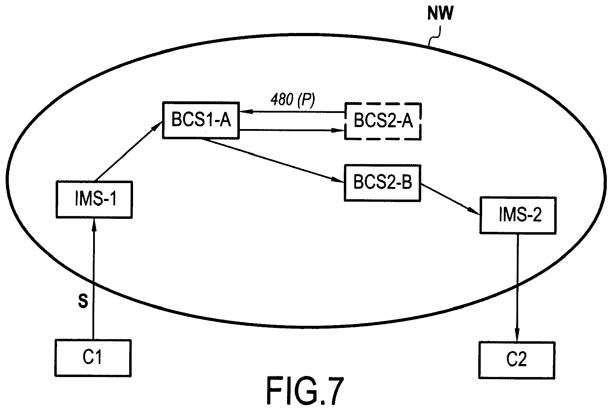

On suppose, dans l'exemple représenté sur la figure 7, que l'équipement de bordure BCS2-A est temporairement en surcharge : il n'est donc pas en mesure de traiter une requête SIP lui parvenant, et par conséquent de la transmettre au nœud suivant pour acheminement jusqu'à son destinataire. En revanche ici, aucun événement n'empêche les autres équipements de traiter les requêtes SIP qu'ils reçoivent.

On suppose en outre qu'une requête S d'appel SIP est envoyée par le terminal client C1 à destination du terminal client C2, C1 et C2 étant ici des téléphones mobiles. Cette requête S est une demande d'établissement d'appel INVITE. Bien entendu, l'invention s'applique également à tout autre type de requêtes SIP, qu'il s'agisse notamment d'une requête ouvrant un dialogue (ex. INVITE ou SUBSCRIBE), d'une requête ouvrant une transaction au sein d'un dialogue (ex. ACK ou BYE) ou d'une requête ouvrant une transaction non liée à un dialogue (ex. OPTION).

La requête S transite tout d'abord par le nœud IMS-1. Sur réception de cette requête S (étape E10), le nœud IMS-1 vérifie sa capacité à la traiter (étape E20). Puis il exécute les fonctions qui lui sont associées sur la requête S, et stocke en mémoire une copie de la requête S éventuellement modifiée (étape E30).

Par souci de simplification dans la suite de la description, on désignera indifféremment par requête S, la requête initialement envoyée par le client C1, ainsi que toute requête obtenue suite à l'application des fonctions associées aux nœuds par lesquels transite la requête S.

Après consultation de sa table de routage RTI1, le nœud IMS-1 transmet la requête S au nœud suivant, à savoir l'équipement de bordure BCS1-A (étape E40). On notera que la sélection d'un nœud parmi une pluralité de nœuds candidats au routage et contenus dans une table de routage est connue de l'homme du métier et ne sera pas décrite plus en détails ici.

De façon similaire, sur réception de la requête S (étape E10), le nœud BCS1-A vérifie sa capacité à la traiter (étape E20), exécute le cas échéant les fonctions qui lui sont associées, puis stocke en mémoire une copie de la requête S ainsi obtenue (étape E30). Après consultation de sa table de routage RTB1, il transmet la requête S au nœud suivant, à savoir l'équipement de bordure BCS2-A (étape E40).

Cette requête S est alors reçue par le nœud BCS2-A (étape E10), temporairement en surcharge.

Sur réception de la requête S, le nœud BCS2-A examine ses ressources et détecte qu'il ne dispose pas de ressources suffisantes pour traiter la requête S (étape E20). Par exemple, en raison d'un nombre trop important de requêtes à traiter, son processeur CPU est surchargé (événement empêchant le traitement de la requête au sens de l'invention).

En variante, d'autres événements ou situations peuvent empêcher le traitement d'une requête par le nœud BCS2-A. Par exemple, celui-ci peut détecter que toutes ses ressources IP sont prises par d'autres requêtes, ou que la ligne physique à emprunter pour transmettre la requête S au nœud suivant est inutilisable.

Conformément au protocole SIP, le nœud BCS2-A s'apprête à envoyer une réponse d'échec (ou d'erreur) au nœud BCS1-A, situé immédiatement en amont du nœud BCS2-A dans le chemin emprunté par la requête S et lui ayant transmis la requête S, afin de lui notifier son empêchement. On suppose ici que cette réponse d'échec est une requête « 480 Temporarily Unavailable». Elle constitue une réponse SIP notifiant un empêchement au sens de l'invention. Bien entendu, d'autres réponses d'échec ou d'erreur spécifiées par le protocole SIP pourraient être envisagées, comme par exemple la réponse d'échec 503.

Avantageusement selon l'invention, le nœud BCS2-A active au préalable dans la réponse d'échec 480, un paramètre noté P, indiquant qu'un reroutage par le nœud BCS1-A (et plus généralement, par tout nœud recevant la réponse dans laquelle le paramètre P est activé), est autorisé.

L'activation du paramètre P dans la réponse d'échec est conditionnée ici par la vérification d'au moins un critère supplémentaire en plus de la détection d'un événement empêchant le traitement de la requête S (étape E50). Il s'agit d'un critère *c* lié à la capacité du nœud BCS1-A auquel est envoyée la réponse d'échec à interpréter et à traiter le paramètre P. En variante, d'autres critères peuvent être vérifiés, comme par exemple un critère lié à la nature de l'empêchement, etc.

Dans l'exemple envisagé ici, de façon avantageuse, lorsqu'un nœud du chemin emprunté par la requête S sait interpréter et traiter le paramètre P conformément à l'invention, autrement dit, lorsqu'il met en œuvre le procédé de traitement selon l'invention, il insert dans la requête S, avant de la transmettre au nœud suivant (i.e., avant l'étape E40), un identifiant (tel que son adresse IP), ainsi qu'une indication selon laquelle il est capable de traiter le paramètre P.

Cet identifiant et cette indication sont insérés ici dans l'entête « Supported » de la requête. De façon connue de l'homme du métier, cet entête indique, à l'aide d'identifiants spécifiques aussi appelés tags d'option (« option tags » en anglais), prédéfinis auprès de l'IANA (Internet Assigned Number Authority), les différents services supportés par les nœuds par lesquels transite la requête. Une description des entêtes et des tags d'option déjà déclarés auprès de l'IANA est présentée dans le document RFC 3261.

En variante, ils peuvent faire l'objet d'un nouvel entête de la requête SIP.

Ainsi, dans l'exemple envisagé ici, les noeuds IMS-1 et BCS1-A, ont inséré, dans l'entête « Supported » de la requête S, leur adresse IP ainsi qu'une indication selon laquelle ils sont capables de traiter le paramètre P.

Pour déterminer si le critère *c* est vérifié, le nœud BCS2-A examine, dans un premier temps, si la requête S comprend une indication selon laquelle un nœud du chemin emprunté jusqu'alors par la requête S met en œuvre le procédé de traitement selon l'invention.

Le cas échéant, le nœud BCS2-A compare l'identifiant du ou des nœuds associés à cette indication, à savoir ici, l'adresse IP du nœud BCS1-A et l'adresse IP du nœud IMS-1, avec l'identifiant du nœud dont il a reçu la requête, et qui est présent, conformément au protocole SIP, dans le paramètre « Received » de l'entête « Via » de la requête S. Cette comparaison a pour but de détecter dynamiquement, avant d'autoriser un reroutage, si le nœud ayant indiqué sa capacité à traiter le paramètre P est bien le nœud directement en amont du nœud BCS2-A, c'est-à-dire celui qui lui a transmis la requête S. De cette sorte, on se prémunit de la situation dans laquelle un nœud intermédiaire, non conforme à l'invention, se trouverait entre le nœud BCS2-A et le nœud BCS1-A, et ne ferait que retransmettre de façon transparente la requête S (autrement dit sans la modifier), sans que le nœud BCS2-A ne puisse le détecter.

Si les identifiants sont différents (i.e. l'identifiant du nœud dont il a reçu la requête ne coïncide pas avec l'un des identifiants associés aux nœuds capables de traiter le paramètre P), le nœud BCS2-A n'active pas le paramètre P dans la réponse d'échec mais la transmet telle quelle au nœud BCS1-A (étape E60).

L'identifiant du nœud BCS1-A figurant ici dans l'entête Supported, le critère *c* est vérifié, et le nœud BCS2-A active dans la réponse d'échec 480 le paramètre P (étape E70).

Plus précisément, dans l'exemple envisagé ici, le nœud BCS2-A insère le paramètre P dans la réponse d'échec 480. Le paramètre P est inséré en tant que nouvel entête de la réponse d'échec. En variante, il peut s'agir d'un nouveau champ inséré dans un entête de la réponse d'échec ou d'un nouvel élément inséré dans le corps de la réponse d'échec.

L'insertion du paramètre dans la requête constitue une activation de ce paramètre au sens de l'invention. Avantageusement, la valeur du paramètre P ainsi inséré peut dépendre de la cause ou de la nature de l'empêchement. Par exemple et à titre illustratif uniquement :
P=1 en cas de surcharge,
P=2 en cas de ligne inutilisable.

La réponse d'échec 480 comprenant le paramètre P est alors envoyée au nœud BCS1-A (étape E80). Cette réponse est transportée sur le réseau dans un signal conforme à l'invention.

En variante, la vérification du critère *c* peut être réalisée à l'aide d'une liste statique préconstituée, et mémorisée au niveau du nœud BCS2-A, cette liste comprenant les identifiants des nœuds du réseau NW mettant en œuvre le procédé de traitement selon l'invention. Cette liste devra toutefois être mise à jour au gré des changements affectant les nœuds, tels que par exemple des changements de version logicielle des nœuds ou de topologie du réseau.

En référence à la figure 6, sur réception de la réponse d'échec 480 (étape F10), le nœud BCS1-A détermine si celle-ci contient le paramètre P lui autorisant un reroutage (i.e. si le paramètre P est activé dans la réponse d'échec reçue) (étape F20).

Si la réponse d'échec 480 ne contient pas le paramètre P, alors le nœud BCS1-A transmet cette réponse au nœud immédiatement en amont (identifié dans l'entête Via de la requête S), sans tenter de reroutage de la requête S (étape F30).

La réponse d'échec 480 contenant ici le paramètre P, le nœud BCS1-A recherche alors, dans sa table de routage, une autre route pour la requête S (étape F40), c'est-à-dire un nœud distinct du nœud BCS2-A, vers lequel rerouter la requête SIP S.

Si aucun nœud alternatif n'a pu être identifié au cours de cette étape de recherche (étape F50), le nœud BCS1-A supprime ici le paramètre P de la réponse d'échec 480 et transmet la requête ainsi modifiée au nœud immédiatement en amont (c'est-à-dire au nœud IMS-1), sans tenter de reroutage de la requête S (étape F30). La suppression du paramètre P constitue une étape de désactivation du paramètre P au sens de l'invention.

En variante, dans un autre mode de réalisation, le nœud BCS2-A n'ayant pu entreprendre de reroutage de la requête du fait de l'absence de route alternative, transmet la réponse d'échec avec le paramètre P au nœud IMS-1. Celui-ci tentera alors, sur réception de la réponse d'échec avec le paramètre P, un reroutage de la requête SIP, et supprimera le paramètre P en cas d'échec du reroutage afin d'éviter des reroutages en cascade.

Ainsi, conformément à l'invention, le paramètre P peut avantageusement être configuré par le nœud recevant la réponse d'échec, de sorte à adapter les stratégies de reroutage de la requête S notamment à la topologie du réseau et à l'état des nœuds du réseau.

La recherche d'un nœud alternatif constitue en soi une vérification d'un critère prédéterminé au sens de l'invention (i.e. présence d'un nœud alternatif pour rerouter la requête). D'autres critères peuvent en variante être envisagés avant de décider la désactivation du paramètre P dans la réponse, comme notamment, la détection d'un nœud particulier. Ces critères sont destinés à identifier certaines situations dans lesquelles, il peut être pertinent de tenter un reroutage par un nœud situé en amont.

Si au moins un nœud alternatif (i.e. un candidat potentiel pour le reroutage) a pu être identifié par le nœud BCS2-A (étape F50) au cours de l'étape de recherche, une opération de reroutage de la requête S, préalablement stockée par le nœud BCS1-A, est entreprise par le nœud BCS1-A à destination du nœud alternatif identifié (étape F60). Cette étape est mise en œuvre selon des mécanismes connus de l'homme du métier et non décrits davantage ici. Il en est de même du choix du nœud parmi les candidats au routage en cas de pluralité de candidats disponibles.

Dans l'exemple envisagé ici (cf. figure 4), le nœud BCS1-A détermine que le nœud BCS2-B est un candidat potentiel pour le reroutage.

Deux cas de figure peuvent alors être rencontrés (étape F70) :
- soit la requête S est traitée par le nœud BCS2-B : elle est alors transmise au nœud IMS-2 pour acheminement jusqu'au client C2 (étape F80) ;
- soit, suite au reroutage vers le nœud BCS2-B, le nœud BCS1-A reçoit une nouvelle réponse d'échec, envoyée cette fois-ci par le nœud vers lequel le reroutage a été opéré (i.e. le nœud BCS2-B) (étape F70) : un nouveau candidat potentiel pour le reroutage, identifié au cours de l'étape de recherche F40, est alors considéré et les étapes F60-F90 sont reprises.

Si toutefois tous les nœuds candidats identifiés à l'étape de recherche ont été testés (étape F90) et ont transmis au nœud BCS1-A une réponse d'échec notifiant un empêchement à traiter la requête S, le nœud BCS1-A supprime le paramètre P de la réponse d'échec 480 reçue précédemment (étape F100). Cette étape de suppression est une étape de désactivation du paramètre P au sens de l'invention.

Il envoie ensuite la réponse d'échec 480, sans le paramètre P, au nœud immédiatement en amont et dont il a reçu la requête S, à savoir le nœud IMS-1 (étape F110).

Celui-ci recevant la réponse d'échec sans le paramètre P, ne tente pas de reroutage de la requête, mais relaye la réponse d'échec telle quelle jusqu'au client C1.

On notera que dans l'exemple envisagé ici, le nœud BCS-1A n'est pas le nœud à l'origine de la requête SIP S, i.e., il a reçu cette requête du nœud IMS-1A, qui lui-même a reçu la requête du nœud C1. Si l'on suppose dans un autre exemple, que le nœud BCS-1A est le nœud à l'origine de la requête S, et que toute tentative de reroutage entreprise par le nœud BCS-1A suite à la réception de la réponse 480 échoue, alors le nœud BCS-1A notifie cet échec aux entités impactées par l'échec de la transmission de la requête S.

On notera en outre, que dans le mode de réalisation décrit ici, le paramètre P est désactivé dans la réponse d'échec SIP 480 transmise par le nœud BCS-2A au nœud BCS-1A, avant son envoi au nœud IMS-1. Toutefois, de façon équivalente, le nœud BCS-1A peut désactiver le paramètre P (autrement dit ici, ne pas l'insérer) dans la réponse d'échec SIP reçue du nœud BCS-2B à l'étape E70, et transférer cette réponse vers le nœud IMS-1. En variante, il peut également désactiver ce paramètre dans une nouvelle réponse d'échec SIP qu'il transmet au nœud IMS-1.

## Revendications

1. Procédé d'envoi d'une réponse conforme au protocole Session Initiation Protocol, SIP, par un premier nœud (BCS2-A) d'un réseau de télécommunications, comprenant :
- une étape de réception (E10) par le premier nœud (BCS2-A) d'une requête SIP (S) envoyée par un second nœud (BCS1-A) du réseau ;
- une étape de détection (E20) d'un événement empêchant un traitement de cette requête par le premier nœud ;
- une étape d'envoi (E80) au second nœud d'une réponse SIP notifiant cet empêchement ;
ledit procédé étant **caractérisé en ce qu'**il comprend en outre, avant l'étape d'envoi :
- une étape de vérification (E50) de la capacité par le second nœud (BSC1-A) à interpréter et à traiter un paramètre (P),
- une étape d'activation (E70) dans la réponse SIP du paramètre (P), le paramètre (P) autorisant un reroutage de la requête par le second nœud (BCS1-A).

2. Procédé d'envoi selon la revendication 1, **caractérisé en ce qu'**on vérifie la validité du critère lié à la capacité du second nœud à traiter le paramètre en utilisant une indication comprise dans la requête SIP et un identifiant du second nœud.

3. Procédé d'envoi selon la revendication 1, **caractérisé en ce qu'**une valeur dudit paramètre dépend d'une cause de l'empêchement.

4. Programme d'ordinateur comportant des instructions pour l'exécution des étapes du procédé d'envoi selon la revendication 1, lorsque ledit programme est exécuté par un ordinateur.

5. Procédé de traitement d'une réponse conforme au protocole Session Initiation Protocol, SIP, mis en œuvre par un premier nœud (BCS1-A) d'un réseau de télécommunications après avoir transféré à un deuxième nœud (BCS2-A) du réseau une requête SIP (S) reçue d'un troisième nœud (IMS-1), ladite réponse étant reçue (F10) du deuxième nœud (BCS2-A) et notifiant le premier nœud (BCS1-A) d'un empêchement d'un traitement de la requête par le deuxième nœud, ledit procédé étant **caractérisé en ce qu'**il comprend :
- si la réponse reçue du deuxième nœud contient un paramètre activé (P) autorisant un reroutage de la requête et configuré par le deuxième nœud (F20), ledit paramètre ayant été activé lors d'un procédé d'envoi selon l'une quelconque des revendications 1 à 3 :
- une étape de recherche (F40) d'au moins un quatrième nœud vers lequel rerouter la requête ;
- une étape de reroutage (F60) de la requête (S) vers ledit au moins un quatrième nœud (BCS2-B), le cas échéant ; et
- si le premier nœud (BCS1-A) est notifié (F70) d'un empêchement d'un traitement de la requête (S) par ledit au moins un quatrième nœud (BCS2-B), une étape d'envoi (F110) au troisième nœud (IMS-1) d'une réponse SIP notifiant celui-ci d'un empêchement d'un traitement de la requête, dans laquelle ledit paramètre est désactivé (F100) ;
- sinon, une étape de transfert (F30) de la réponse reçue du second nœud (BCS2-A) au troisième nœud (IMS-1).

6. Procédé de traitement selon la revendication 5, comprenant en outre, si l'étape de recherche (F40) ne permet pas d'identifier un quatrième nœud :
- une étape de désactivation dudit paramètre dans la réponse reçue du deuxième nœud ; et
- une étape d'envoi de la réponse ainsi modifiée au troisième nœud.

7. Procédé de traitement selon la revendication 5, comprenant en outre, lorsque ladite réponse reçue du deuxième nœud contient ledit paramètre activé, une étape de vérification de la validité d'au moins un critère prédéterminé, et, si ledit au moins un critère est valide, une étape d'envoi au troisième nœud (IMS-1) d'une réponse SIP notifiant celui-ci d'un empêchement d'un traitement de la requête, dans laquelle ledit paramètre est activé (F100).

8. Programme d'ordinateur comportant des instructions pour l'exécution des étapes du procédé de traitement selon la revendication 5, lorsque ledit programme est exécuté par un ordinateur.

9. Dispositif d'envoi d'une réponse conforme au protocole Session Initiation Protocol, SIP, (BCS2-A) dans un réseau de télécommunications comprenant :
- des moyens pour recevoir une requête SIP (S) envoyée par un second dispositif (BS1-A) du réseau ;
- des moyens pour détecter un événement empêchant un traitement de cette requête (S) par ledit dispositif d'envoi (BCS2-A) ;
- des moyens pour envoyer au second dispositif (BCS1-A) une réponse SIP notifiant cet empêchement ;
ledit dispositif d'envoi étant **caractérisé en ce qu'**il comprend en outre des moyens, avant l'envoi de la réponse SIP, de vérification de la capacité par le second dispositif (BCS1-A) à interpréter et à traiter un paramètre (P) et d'activation dans la réponse SIP du du paramètre (P), le paramètre (P) autorisant un reroutage de la requête par le second dispositif (BCS1-A).

10. Système d'un réseau de télécommunications comprenant au moins un équipement source (C1) et un équipement destinataire (C2) aptes à échanger une requête conforme au protocole Session Initiation Protocol, SIP, (S), et une pluralité de nœuds intermédiaires (IMS-1, IMS-2, BCS1-A, BCS2-A, BCS1-B, BCS2-B) par lesquels transite cette requête entre l'équipement source et l'équipement destinataire, ledit système étant **caractérisé en ce qu'**au moins un desdits nœuds intermédiaires (BCS2-A) du système est un dispositif d'envoi conforme à la revendication 9 et au moins un desdits nœuds intermédiaires (BCS1-A) du système est un dispositif de traitement (BCS1-A) d'une réponse SIP d'un réseau de télécommunications, adapté à traiter ladite réponse après avoir transféré à un deuxième dispositif (BCS2-A) du réseau une requête SIP (S) reçue d'un troisième dispositif (IMS-1), ladite réponse étant reçue du deuxième dispositif (BCS2-A) et notifiant ledit dispositif de traitement (BCS1-A) d'un empêchement d'un traitement de la requête (S) par le deuxième dispositif (BCS2-A), ledit dispositif de traitement étant **caractérisé en ce qu'**il comprend :
- des moyens, activés si la réponse reçue du deuxième nœud contient un paramètre activé (P) autorisant un reroutage de la requête et pouvant être configuré par ledit deuxième dispositif, ledit paramètre ayant été activé par un dispositif d'envoi selon la revendication 9 :
- pour rechercher au moins un quatrième dispositif vers lequel rerouter la requête (S) ;
- pour rerouter la requête vers ledit au moins un quatrième dispositif (BCS2-B), le cas échéant ; et
- des moyens, activés si en outre le dispositif de traitement (BSC1-A) est notifié d'un empêchement d'un traitement de la requête par ledit au moins un quatrième dispositif (BCS2-B), pour envoyer au troisième nœud (IMS-1) une réponse SIP notifiant celui-ci d'un empêchement d'un traitement de la requête, dans laquelle ledit paramètre est désactivé ;
- des moyens activés sinon, pour transférer la réponse reçue du second nœud (BCS2-A) au troisième dispositif (IMS-1).

## Patentansprüche

1. Verfahren zum Senden einer Antwort gemäß dem Session Initiation Protocol, SIP, durch einen ersten Knoten (BCS2-A) eines Telekommunikationsnetzes, umfassend:
- einen Schritt des Empfangens (E10), durch den ersten Knoten (BCS2-A), einer SIP-Anforderung (S), die von einem zweiten Knoten (BCS1-A) des Netzes gesendet wird;
- einen Schritt des Detektierens (E20) eines Ereignisses, das eine Verarbeitung dieser Anforderung durch den ersten Knoten behindert;
- einen Schritt des Sendens (E80), an den zweiten Knoten, einer SIP-Antwort, die diese Behinderung meldet;
wobei das genannte Verfahren **dadurch gekennzeichnet ist, dass** es außerdem umfasst, vor dem Sendeschritt:
- einen Schritt des Verifizierens (E50) der Kapazität durch den zweiten Knoten (BCS1-A), um einen Parameter (P) zu interpretieren und zu verarbeiten,
- einen Schritt des Aktivierens (E70), in der SIP-Antwort, des Parameters (P), wobei der Parameter (P) ein Um-Routen der Anforderung durch den zweiten Knoten (BCS1-A) autorisiert.

2. Sendeverfahren nach Anspruch 1, **dadurch gekennzeichnet, dass** die Gültigkeit des Kriteriums, das mit der Kapazität des zweiten Knotens verbunden ist, um den Parameter zu verarbeiten, unter Verwendung einer Indikation, die in der SIP-Antwort enthalten ist, und eines Identifikators des zweiten Knotens verifiziert wird.

3. Sendeverfahren nach Anspruch 1, **dadurch gekennzeichnet, dass** ein Wert des genannten Parameters von einer Ursache der Behinderung abhängig ist.

4. Computerprogramm, umfassend Instruktionen zur Ausführung der Schritt des Sendeverfahrens nach Anspruch 1, wenn das genannte Programm von einem Computer ausgeführt wird.

5. Verfahren zum Verarbeiten einer Antwort gemäß dem Session Initiation Protocol, SIP, das von einem ersten Knoten (BCS1-A) eines Telekommunikationsnetzes durchgeführt wird, nachdem zu einem zweiten Knoten (BCS2-A) des Netzes eine SIP-Anforderung (S) transferiert wurde, die von einem dritten Knoten (IMS-1) empfangen wird, wobei die Antwort von dem zweiten Knoten (BCS2-A) empfangen wird (F10) und dem ersten Knoten (BCS1-A) eine Behinderung einer Verarbeitung der Anforderung durch den zweiten Knoten gemeldet wird, wobei das Verfahren **dadurch gekennzeichnet ist, dass** es umfasst:
- wenn die Antwort, die von dem zweiten Knoten empfangen wird, einen aktivierten Parameter (P) enthält, der ein Um-Routen der Anforderung autorisiert und von dem zweiten Knoten ausgelegt wird (F20), wobei der genannte Parameter während eines Sendeverfahrens nach einem der Ansprüche 1 bis 3 aktiviert wurde:
- einen Schritt des Suchens (F40) mindestens eines vierten Knotens, zu dem die Anforderung umzurouten ist;
- gegebenenfalls einen Schritt des Um-Routens (F60) der Anforderung (S) zu dem mindestens einen vierten Knoten (BCS2-B); und
- wenn dem ersten Knoten (BCS1-A) eine Behinderung einer Verarbeitung der Anforderung (S) von dem mindestens einen vierten Knoten (BCS2-B) gemeldet wird (F70), einen Schritt des Sendens (F110), an den dritten Knoten (IMS-1), einer SIP-Antwort, die diesem eine Behinderung einer Verarbeitung der Anforderung meldet, wobei der genannte Parameter deaktiviert wird (F100);
- wenn nicht, einen Schritt des Transferierens (F30) der Antwort, die von dem zweiten Knoten (BCS2-A) empfangen wird, zu dem dritten Knoten (IMS-1).

6. Verarbeitungsverfahren nach Anspruch 5, außerdem umfassend, wenn es der Suchschritt (F40) nicht gestattet, einen vierten Knoten zu identifizieren:
- einen Schritt des Deaktivierens des genannten Parameters in der Antwort, die von dem zweiten Knoten empfangen wird; und
- einen Schritt des Sendes der so modifizierten Antwort an den dritten Knoten.

7. Verarbeitungsverfahren nach Anspruch 5, außerdem umfassend, wenn die genannte Antwort, die von dem zweiten Knoten empfangen wird, den aktivierten Parameter enthält, einen Schritt des Verifizierens der Gültigkeit mindestens eines vorherbestimmten Kriteriums, und, wenn das genannte mindestens eine Kriterium gültig ist, einen Schritt des Sendens, an den dritten Knoten (IMS-1), einer SIP-Antwort, die diesem eine Behinderung einer Verarbeitung der Anforderung meldet, wobei der genannte Parameter aktiviert wird (F100).

8. Computerprogramm, umfassend Instruktionen zur Ausführung der Schritte des Verarbeitungsverfahrens nach Anspruch 5, wenn das genannte Programm von einem Computer ausgeführt wird.

9. Vorrichtung zum Senden einer Antwort gemäß dem Session Initiation Protocol, SIP, (BCS2-A) in einem Telekommunikationsnetz, umfassend:
- Mittel zum Empfangen einer SIP-Anforderung (S), die von einer zweiten Vorrichtung (BS1-A) des Netzes gesendet wird;
- Mittel zum Detektieren eines Ereignisses, das eine Verarbeitung dieser Anforderung (S) durch die Sendevorrichtung (BCS2-A) behindert;
- Mittel zum Senden, an die zweite Vorrichtung (BCS1-A), einer SIP-Antwort, die diese Behinderung meldet;
wobei die Sendevorrichtung **dadurch gekennzeichnet ist, dass** sie außerdem Mittel, vor dem Senden der SIP-Antwort, zum Verifizieren der Kapazität durch die zweite Vorrichtung (BCS1-A), um einen Parameter (P) zu interpretieren und zu verarbeiten, und zum Aktivieren, in der SIP-Antwort, des Parameters (P) umfasst, wobei der Parameter (P) ein Um-Routen der Anforderung durch die zweite Vorrichtung (BCS1-A) autorisiert.

10. System eines Telekommunikationsnetzes, umfassend mindestens eine Ursprungsausrüstung (C1) und eine Zielausrüstung (C2), die dafür geeignet sind, eine Anforderung (S) gemäß dem Session Initiation Protocol, SIP, auszutauschen, und eine Vielzahl von Zwischenknoten (IMS-1, IMS-2, BCS1-A, BCS2-A, BCS1-B, BCS2-B), durch die sich diese Anforderung zwischen der Ursprungsausrüstung und der Zielausrüstung bewegt, wobei das System **dadurch gekennzeichnet ist, dass** mindestens einer der genannten Zwischenknoten (BCS2-A) des Systems eine Sendevorrichtung nach Anspruch 9 ist, und mindestens einer der genannten Zwischenknoten (BCS1-A) des Systems eine Vorrichtung zur Verarbeitung (BCS1-A) einer SIP-Antwort eines Telekommunikationsnetzes ist, die dafür geeignet ist, um die genannte Antwort zu verarbeiten, nachdem, zu einer zweiten Vorrichtung (BCS2-A) des Netzes, eine SIP-Anforderung (S) transferiert wird, die von einer dritten Vorrichtung (IMS-1) empfangen wird, wobei die genannte Antwort von einer zweiten Vorrichtung (BCS2-A) empfangen wird und der genannten Verarbeitungsvorrichtung (BCS1-A) eine Behinderung einer Verarbeitung der Anforderung (S) durch die zweite Vorrichtung (BCS2-A) gemeldet wird, wobei die Verarbeitungsvorrichtung **dadurch gekennzeichnet ist, dass** sie umfasst:
- Mittel, die aktiviert werden, wenn die Antwort, die von dem zweiten Knoten empfangen wird, einen aktivierten Parameter (P) enthält, der ein Um-Routen der Anforderung autorisiert und von der genannten zweiten Vorrichtung ausgelegt werden kann, wobei der genannte Parameter von einer Sendevorrichtung nach Anspruch 9 aktiviert wurde:
- um mindestens eine vierte Vorrichtung zu suchen, zu der die Anforderung (S) umzurouten ist;
- um gegebenenfalls die Anforderung zu der mindestens einen vierten Vorrichtung (BCS2-B) umzurouten; und
- Mittel, die aktiviert werden, wenn außerdem der Verarbeitungsvorrichtung (BSC1-A) eine Behinderung einer Verarbeitung der Anforderung durch die mindestens eine vierte Vorrichtung (BCS2-B) gemeldet wird, um an den dritten Knoten (IMS-1) eine SIP-Antwort zu senden, die diesem eine Behinderung einer Verarbeitung der Anforderung meldet, wobei der Parameter deaktiviert wird;
- Mittel, die aktiviert werden, wenn nicht, um die Antwort, die von dem zweiten Knoten (BCS2-A) empfangen wird, zu der dritten Vorrichtung (IMS-1) zu transferieren.

## Claims

1. A method for sending a Session Initiation Protocol, or SIP, protocol conforming response by a first node (BCS2-A) of a telecommunication network, the method comprising:
- receiving (E10) by the first node (BCS2-A) a SIP request (S) sent by a second node (BCS1-A) of the network;
- detecting (E20) an event preventing a processing of this request by the first node;
- sending (E80) to the second node a SIP response notifying this prevention;
**characterized in that** it further comprises, before sending:
- checking (E50) the capacity of the second node (BCS1-A) to interpret and process a parameter (P),
- activating (E70) the parameter (P) in the SIP response, the parameter (P) authorizing a rerouting of the request by the second node (BCS1-A).

2. The sending method as defined in claim 1, **characterized in that** the validity of the criterion linked to the capacity of the second node to process the parameter is checked by using an indication contained in the SIP request and an identifier of the second node.

3. The sending method as defined in claim 1, **characterized in that** a value of the parameter depends on a cause of the prevention.

4. A computer program comprising instructions for implementing the steps of the sending method of claim 1, when said program is run by a computer.

5. A method for processing a Session Initiation Protocol, or SIP, protocol conforming response, the method being implemented by a first node (BCS1-A) of a telecommunication network, after having transferred to a second node (BCS2-A) of the network a SIP request (S) received from a third node (IMS-1), the response being received (F10) from the second node (BCS2-A) and notifying the first node (BCS1-A) of a preventing of a processing of the request by the second node, the method being **characterized in that** it comprises:
- if the response received from the second node contains an activated parameter (P) authorizing a rerouting of the request and configured by the second node (F20), said parameter having been activated during a sending method as per any of claims 1 to 3:
- a search step (F40) of at least a fourth node to which reroute the request;
- a reroute step (F60) of request (S) to the at least a fourth node (BCS2-B), where appropriate; and
- if the first node (BCS1-A) is notified (F70) of a preventing of a processing of the request (S) by the at least a fourth node (BCS2-B), a step (F110) of sending to the third node (IMS-1) of a SIP response notifying the latter of a preventing of a processing of the request, in which said parameter is deactivated (F100);
otherwise, a transferring step (F30) of the response received from the second node (BCS2-A) to the third node (IMS-1).

6. The processing method as defined in claim 5, further comprising, if the search step (F40) fails to identify an at least a fourth node:
- deactivating the parameter in the response received from the second node; and
- sending the thus modified response to the third node.

7. The processing method as defined in claim 5, further comprising, when the response received from the second node contains the activated parameter, checking the validity of at least one predetermined criterion, and, if the at least one criterion is valid, sending, to the third node (IMS-1), a SIP response notifying the latter of a preventing of a processing of the request, in which the parameter is activated (F100).

8. A computer program comprising instructions for implementing the processing method of claim 5, when said program is run by a computer.

9. A device for sending a Session Initiation Protocol, SIP, protocol conforming response (BCS2-A) in a telecommunication network, the device comprising:
- means for receiving a SIP request (S) sent by a second device (BS1-A) of the network;
- means for detecting an event preventing a processing of this request (S) by said sending device (BCS2-A);
- means for sending to the second device (BCS1-A) a SIP response notifying this preventing;
said sending device being **characterized in that** it further comprises means, before the SIP response is sent, for checking the capacity of the second device (BCS1-A) to interpret and process a parameter (P) and for activating in the SIP response of said parameter (P), said parameter (P) authorizing a rerouting of the request by the second device (BCS1-A).

10. A system of a telecommunication network, comprising at least one source element (C1) and a destination element (C2) configured for exchanging a SIP conforming request (S), and a plurality of intermediate nodes (IMS-1, IMS-2, BCS1-A, BCS2-A, BCS1-B, BCS2-B) through which this request passes between the source element and the destination element, said system being **characterized in that** at least one of the intermediate nodes (BCS2-A) of the system is a sending device as defined in claim 9 and at least one of said intermediate nodes (BCS1-A) of the system is a processing device (BCS1-A) of a SIP response of a telecommunication network, adapted to process said response after having transferred to a second device (BCS2-A) of the network a SIP request (S) received from a third device (IMS-1), the response being received from the second device (BCS2-A) and notifying the first device (BCS1-A) of a preventing of a processing of the request (S) by the second device, the device being **characterized in that** it comprises:
- if the response received from the second node contains an activated parameter (P) authorizing a rerouting of the request and which can be configured by the second device, said parameter having been activated by a processing device as per claim 9, means for
- searching of at least a fourth device to which reroute the request (S);
- rerouting said request to the at least a fourth device (BCS2-B), where appropriate;
and
- if furthermore the processing device (BCS1-A) is notified of a preventing of a processing of the request by the at least a fourth device (BCS2-B), means for sending to the third node (IMS-1) of a SIP response notifying the latter of a preventing of a processing of the request, in which said parameter is deactivated;
otherwise, transferring means for transferring of the response received from the second node (BCS2-A) to the third device (IMS-1).
